# DEMANDE DE BREVET EUROPEEN

(11) **EP 3 326 920 A1**
(43) Date de publication de la demande: **30.05.2018**
(21) Numéro de dépôt: 17203917.4
(22) Date de dépôt: 27.11.2017
(51) Int. Cl.: B64G 1/22

(54) **STRUCTURE DÉPLOYABLE À DÉPLOIEMENT SPONTANÉ**

(30) Priorité: 28.11.2016 FR 1661572
(71) Demandeur: CENTRE NATIONAL D'ÉTUDES SPATIALES (C N E S), 75001 Paris (FR)
(72) Inventeur: CASTERAS, Christophe, 31400 Toulouse (FR)
(74) Mandataire: Cabinet BARRE LAFORGUE & associés

(57) **Abrégé**

L'invention concerne une structure (1) déployable à déploiement spontané, comprenant au moins deux panneaux (2) adjacents articulés entre eux, chaque panneau présentant une surface non plane au repos, la structure étant adaptée pour pouvoir être placée dans une position repliée dans laquelle les panneaux sont repliés les uns sur les autres et maintenus à plat par compression et déformation élastique de leur courbure ou dans une position déployée dans laquelle les panneaux sont alignés bord à bord sur leurs bords attenants et s'étendant le prolongement les uns des autres. Une liaison (7) souple reliant les bords attenants des panneaux comprend au moins un premier lien de traction (4) maintenant les panneaux bord à bord en position déployée, au moins un deuxième lien de compression (5) adapté pour être plaqué sur les faces externes des panneaux et présentant une longueur adaptée pour que le lien de compression reste sous tension tant qu'une déformation élastique des panneaux subsiste. La liaison (7) souple comprend en outre au moins un lien d'alignement (6) adapté pour empêcher un déplacement latéral des panneaux l'un par rapport à l'autre. La structure déployable est adaptée pour former des panneaux solaires et/ou des antennes pour des satellites dans l'espace, particulièrement pour des microsatellites.

## Description

L'invention concerne une structure déployable, à déploiement spontané, constituée de panneaux articulés entre eux. En particulier, l'invention concerne une telle structure utilisable pour former des antennes ou des panneaux photovoltaïques par exemple dans l'espace, à bord de satellites, ou encore des panneaux d'affichage dépliables sur terre.

Dans le domaine spatial, il est souvent nécessaire de faire usage de structures de grande envergure, par exemple pour former des antennes ou des panneaux photovoltaïques destinés à alimenter un satellite en énergie électrique. Cependant, ces structures doivent supporter les accélérations du lancement et de la mise en orbite et sont généralement repliées sous une forme compacte au moment du lancement. Une fois en orbite, il est nécessaire de pouvoir les déployer et les maintenir en position déployée.

EP 0 360 694 décrit une structure comportant une pluralité de panneaux reliés entre eux par des charnières et articulés deux à deux pour permettre un pliage en accordéon. Ces panneaux présentent une courbure naturelle au repos, ladite courbure étant aplatie par des moyens de bridage maintenant une précontrainte élastique lorsque le panneau est replié. Une fois dans l'espace, cette structure est dépliée au moyen d'éléments moteurs externes par exemple par des moyens de motorisation associés aux charnières (ressorts de torsion) ou encore avec un système de câbles. Une fois déployés, les panneaux reprennent alors leur forme naturelle cambrée qui permet un verrouillage automatique en position déployée. Cependant, dans une telle structure, ces moyens de déploiement représentent une masse et un coût non négligeables qu'il est utile de minimiser.

US 3386128 décrit une charnière auto-déployable comprenant de chaque côté des panneaux des bandes courbées élastiques formant des liaisons élastiques en flexion du type connu sous la dénomination « joints de Carpentier ». En position déployée, les panneaux doivent être écartés l'un de l'autre de façon d'une part à permettre pour le repliage le passage d'une boucle formée par une bande s'étendant à l'intérieur de la charnière entre les faces internes des panneaux repliés, et du fait que de telles bandes courbées élastiques présentent en position déployée nécessairement une longueur fixe correspondant à leur longueur totale qui est également égale à leur longueur en position repliée. En conséquence, de tels joints de Carpentier sont incompatibles avec une structure telle que celle de EP 0 360 694 comprenant des liens maintenant les panneaux bord à bord en position déployée.

La présente invention vise donc à fournir une structure déployable qui ne présente pas les inconvénients de la technique antérieure. En particulier la présente invention vise une telle structure capable de se déployer au moins partiellement spontanément une fois inactivés les moyens de bridage en position repliée.

L'invention vise encore à améliorer la fiabilité et la précision de la liaison entre les panneaux de la structure.

L'invention vise en outre à fournir une liaison entre les panneaux de la structure qui présente une masse réduite et un encombrement minimal en particulier dans le sens de l'épaisseur des panneaux.

L'invention vise également à fournir une structure déployable qui présente une grande souplesse et une bonne tenue aux sollicitations mécaniques, tant en traction ou compression selon l'axe longitudinal de la structure une fois déployée qu'en sollicitations selon des axes formant un angle non nul avec cet axe longitudinal.

L'invention vise enfin à fournir une structure déployable qui soit simple et économique à fabriquer et à mettre en oeuvre.

Pour ce faire, l'invention concerne une structure déployable à déploiement spontané selon la revendication 1.

Dans le présent texte on désigne donc par "face interne" d'un panneau la face du panneau qui est en regard de la face du panneau adjacent lorsque les deux panneaux sont repliés l'un contre l'autre par rotation autour de la liaison souple entre les deux panneaux. De même on désigne par "face externe" d'un panneau la face du panneau qui est à l'extérieur d'un ensemble de deux panneaux repliés l'un contre l'autre. La notion de face interne (respectivement face externe) est ainsi une notion relative dépendant de la liaison considérée entre panneaux et de leur mode de pliage. Dans un pliage en accordéon de trois panneaux rectangulaires, une face du panneau médian qui possède une liaison souple à chaque extrémité peut être une face interne par rapport à l'une de ses liaisons si le panneau adjacent à cette liaison se replie sur cette face et simultanément une face externe par rapport à l'autre de ses liaisons si le panneau adjacent à cette liaison se replie sur la face opposée.

On définit également l'axe de déploiement (entre deux panneaux adjacents) comme un axe sensiblement orthogonal à l'axe d'articulation ou de pliage entre ces deux panneaux, dans un plan parallèle au plan moyen des deux panneaux en position déployée. L'axe de déploiement entre deux panneaux adjacents peut être parallèle à une direction générale de déploiement de la structure lorsque celle-ci est par exemple formée de panneaux rectangulaires, mais chaque axe de déploiement entre deux panneaux consécutifs peut s'écarter de cette direction générale de déploiement dans le cas de panneaux triangulaires ou trapézoïdaux disposés de manière alternée ou encore la direction générale de déploiement peut ne pas être rectiligne lorsque les panneaux sont disposés de manière à former une surface polygonale.

Dans un mode de réalisation avantageux, les panneaux adjacents présentent une surface réglée non plane dont les génératrices sont parallèles entre elles et parallèles à l'axe de déploiement.

Dans cette version plus simple de la structure, chaque panneau peut présenter une courbure unique et se présenter en forme de tuile comportant une face concave et une face convexe. En variante, chaque panneau peut présenter une pluralité de courbures d'axes parallèles, les courbures générant sur une même face du panneau une succession de zones concaves et convexes, le panneau se présentant alors sous une forme de tôle ondulée. Dans cette variante, chaque panneau peut stocker, à largeur égale, une quantité plus importante d'énergie élastique de déformation pour une épaisseur de panneau moindre. Pour la simplicité de la description, celle-ci sera réalisée en prenant pour exemple des panneaux à courbure unique présentant une face concave et une face convexe, les panneaux à courbures multiples pouvant s'en déduire au moyen d'une simple juxtaposition.

Ainsi, lorsque la structure comprend une pluralité de panneaux présentant une courbure au repos telle que les faces concaves de tous les panneaux sont d'un même côté de la structure lorsque celle-ci est déployée, lorsque la structure est repliée en accordéon, deux panneaux consécutifs peuvent être repliés face concave contre face concave, les faces concaves formant ainsi les faces internes au regard de la liaison entre ces deux panneaux, ou bien face convexe contre face convexe en repliant la même liaison dans le sens opposé, les faces convexes formant alors les faces internes et les faces concaves devenant les faces externes.

Grâce à chaque lien de traction qui relie les faces internes des panneaux, lorsque ceux-ci se déploient, les panneaux sont maintenus bord à bord et un effort de traction peut être transmis d'un panneau à l'autre sans entraîner de jeu entre les panneaux. Un lien de traction a pour fonction de "tirer" les panneaux l'un vers l'autre en position déployée. Cependant, un lien de traction peut être soumis à un effort d'arrachement au cours du déploiement de la structure si les bords des panneaux tendent à s'écarter l'un de l'autre sous l'effet de la déformation élastique de ceux-ci.

En position repliée, chaque lien de compression, dont la longueur est sensiblement égale à celle des liens de traction plus la somme des épaisseurs des panneaux adjacents qu'il relie, a pour effet de plaquer les faces internes des panneaux l'une contre l'autre et de contribuer à la déformation élastique de la courbure des panneaux. Les contraintes de déformation des panneaux sont alors supportées par la tenue en traction de chaque lien de compression et non par son éventuel assemblage sur la face externe du panneau. Dès lors, la fiabilité de la liaison souple est améliorée.

Les panneaux sont ensuite maintenus en position repliée par des moyens de bridage tels que des verrous, des crochets, des liens polymères (susceptibles d'être coupés par un couteau thermique pour permettre le déploiement de la structure) ou des dispositifs pyrotechniques tels que des boulons explosifs traversant les épaisseurs des panneaux repliés les uns sur les autres, notamment en accordéon (leporello). Lorsque les moyens de bridage des panneaux en position repliée sont inactivés (relaxés) et laissent les panneaux se déployer, le/les lien(s) de compression qui reste(nt) sous tension tant que l'énergie potentielle de déformation élastique des panneaux est non nulle, coopèrent avec les panneaux qui sont rappelés vers leur forme cambrée initiale en exerçant un couple tendant à ouvrir les panneaux de part et d'autre de la liaison vers la position déployée.

Dès lors, le déploiement des panneaux est au moins partiellement assisté par le couple exercé par les liens de compression, jusqu'à ce que l'énergie potentielle élastique de déformation des panneaux se soit dissipée et/ou jusqu'à ce que la position déployée soit atteinte.

En outre, dans une structure selon l'invention, chaque lien de compression est également adapté -notamment présente une souplesse en flexion suffisante et/ou une élasticité en traction- pour présenter en position déployée des panneaux une longueur totale entre ses deux extrémités qui est inférieure à la longueur totale de ce lien de compression en position repliée des panneaux, de telle sorte qu'en position déployée les panneaux soient maintenus bord à bord par chaque lien de traction.

En particulier, dans certains modes de réalisation possibles avantageux, chaque lien de compression est adapté pour pouvoir former une boucle lorsque les panneaux sont en position déployée maintenus bord à bord par chaque lien de traction. Pour ce faire, chaque lien de compression peut en particulier par exemple être inélastique en flexion, ou en tout cas présenter une élasticité en flexion suffisamment faible pour permettre la formation de cette boucle.

En variante ou en combinaison, au moins une partie souple en flexion de chaque lien de compression s'étendant entre les panneaux est au moins partiellement élastique en traction, de sorte que sa longueur diminue lorsque la structure est déployée de la position repliée vers la position déployée. En particulier, dans certains modes de réalisation, chaque lien de compression comporte au moins une partie souple en flexion élastique en traction s'étendant entre les panneaux de sorte que sa longueur diminue lorsque la structure est déployée de la position repliée vers la position déployée.

Selon certains modes de réalisation de l'invention, au moins un - notamment chaque - lien de compression est placé dans une zone choisie pour engendrer un effort de déformation élastique non nul - notamment maximum - des panneaux en position repliée. Une telle zone correspond à celle qui présenterait un écartement non nul - notamment maximum - entre les panneaux en position repliée si ceux-ci étaient superposés sans être aplatis ou déformés par la liaison souple. En plaçant préférentiellement les liens de compression dans la ou les zones où l'énergie élastique de déformation des panneaux est non nulle, et notamment là où elle est maximale, le couple de déploiement exercé par les liens de compression est non nul et notamment maximum. Ces zones sont préférentiellement les extrémités latérales des panneaux si ceux-ci sont agencés de telle sorte que leurs faces internes en regard sont les faces convexes ou la partie médiane du bord du panneau si les panneaux sont agencés de telle sorte que leurs faces internes en regard sont les faces concaves des panneaux.

Dans certains modes de réalisation de l'invention, chaque lien de traction est placé dans une zone où l'effort de déformation élastique engendré entre deux panneaux adjacents par leur aplatissement en position repliée est minimal. Ainsi, lors du déploiement de la structure, les efforts liés à la dissipation de l'énergie élastique emmagasinée dans les panneaux sont minimisés dans cette zone et la fiabilité du lien de traction est augmentée. De plus, les liens de traction sont préférentiellement placés de telle sorte que les efforts de tractions qu'ils subissent permettent d'assurer un maintien optimal vis-à-vis notamment des moments de flexion appliqués sur la structure déployée autour des axes principaux d'inertie de celle-ci.

Dans certains modes de réalisation de l'invention, la liaison souple comprend en outre au moins un troisième lien, dit lien d'alignement, comprenant au moins deux bandes flexibles (souples en flexion) non extensibles (rigides en traction) juxtaposées fixées respectivement et alternativement entre la face externe et la face interne de deux panneaux adjacents. Grâce à chaque lien d'alignement, deux panneaux adjacents reliés par une liaison souple sont maintenus sensiblement dans le prolongement l'un de l'autre, en particulier selon une direction normale à la surface des panneaux au voisinage du lien d'alignement. De même, le lien d'alignement permet d'améliorer le maintien latéral des panneaux l'un par rapport à l'autre, par exemple selon une direction correspondant à un axe instantané de rotation d'un panneau par rapport à l'autre. À cet effet, une première bande du lien d'alignement est fixée sur la face externe du premier des deux panneaux, passe entre les deux panneaux, le long d'un bord du premier panneau en regard d'un bord correspondant du panneau adjacent pour être ensuite fixée sur la face interne du second panneau. La deuxième bande est fixée sur la face interne du premier panneau, passe le long du bord de celui-ci pour être ensuite fixée sur la face externe du deuxième panneau. Les deux bandes sont préférentiellement juxtaposées de manière à minimiser les défauts d'alignement au niveau du joint. Bien entendu, le lien d'alignement peut comprendre plus de deux bandes, l'essentiel étant que ces bandes soient disposées alternativement sur les faces interne et externe et se croisent entre les bords en regard des deux panneaux. Les liens d'alignement permettent ainsi de reprendre au mieux les efforts tranchants appliqués à la structure qui pourraient désaligner les panneaux.

Dans certains modes de réalisation de l'invention, les liens de traction et de compression comprennent au moins une bande, dite bande flexible, souple en flexion fixée sur les faces correspondantes des panneaux.

Ces liens formant la liaison souple - notamment les liens de compression et les liens de traction - peuvent être réalisés de diverses manières, par exemple avec une pluralité de plaques ou de tiges reliées par des charnières (une pour le lien de traction et trois pour le lien de compression). Cependant, de manière avantageuse, une solution fiable et économique consiste à fixer une ou plusieurs bande(s) flexible(s) sur les faces internes pour former les liens de traction et sur les faces externes pour former les liens de compression. De préférence, le matériau utilisé pour au moins une bande flexible -notamment pour ces bandes flexibles- est choisi pour être inextensible en traction, c'est-à-dire que le module d'Young du matériau est suffisamment important pour que l'allongement des bandes soit négligeable par rapport à leur longueur sous l'effet des efforts appliqués, en particulier pour les liens de compression qui supportent les efforts de déformation élastique des panneaux. De même, ce matériau est choisi pour être suffisamment souple en flexion -notamment avantageusement inélastique en flexion (c'est-à-dire que son module d'Young en flexion est suffisamment faible pour que la déformation en flexion de la bande s'effectue sans contrainte)- pour permettre le repliement et le déploiement des panneaux. Ces bandes peuvent être fixées sur les faces des panneaux par collage, boulonnage ou rivetage ou tout autre moyen de fixation.

Dans certains modes de réalisation de l'invention, au moins une bande flexible est une bande métallique, en particulier les bandes flexibles sont des bandes métalliques. Alternativement ou en combinaison, les bandes flexibles non extensibles sont en tissu de fibres minérales enduit de résine souple. Par exemple, les bandes flexibles peuvent être réalisées en acier inoxydable laminé ou en tissu de fibres de verre, de carbone ou d'aramide imprégnées d'une résine souple ou de tout autre matériau répondant aux exigences de souplesse et déformation de la liaison souple à obtenir, par exemple une résine à base de silicones, de caoutchouc naturel ou synthétique, d'élastomères, notamment fluoropolymères, etc.

Dans certains modes de réalisation de l'invention, au moins une partie d'au moins une bande flexible est formée d'une extension des faces correspondantes des panneaux. En particulier au moins une partie des bandes flexibles sont formées d'une extension des faces correspondantes des panneaux, c'est-à-dire d'un seul tenant avec les panneaux. Par exemple, lorsque les panneaux sont réalisés en matériau composite comprenant des faisceaux de fibres de renfort imprégnées d'une matière telle qu'une résine, il est possible de former les liens en utilisant un même écheveau de fibres de renfort pour recouvrir au moins une partie de deux panneaux adjacents. Dès lors, le lien ainsi formé est naturellement solidaire des deux panneaux entre lesquels il est agencé, ce qui minimise les opérations de fabrication et améliore la fiabilité en éliminant des pièces et des opérations supplémentaires pour fixer des liens indépendants entre les panneaux.

Dans certains modes de réalisation de l'invention, deux panneaux adjacents sont reliés par au moins trois groupes de liens placés au milieu et aux extrémités des bords en regard desdits panneaux, chaque groupe de liens comprenant au moins un lien d'alignement et au moins un lien choisi parmi un lien de traction et un lien de compression. Préférentiellement chaque groupe de liens comprend les trois types de lien (traction, compression et alignement) en au moins un exemplaire de chaque. Diverses variantes peuvent être envisagées en fonction du sens de pliage des panneaux entre eux : par exemple si les panneaux sont repliés face concave contre face concave, le groupe de liens placé en partie médiane peut comprendre trois liens de compression sur la face convexe, séparés par deux liens d'alignement et un à trois liens de traction sur l'autre face, en regard des liens de compression. Chaque groupe de liens placé aux extrémités peut comprendre un lien de traction au plus proche des extrémités, un lien d'alignement et un lien de compression, dans cet ordre en direction de la partie médiane des panneaux.

L'invention concerne également une structure déployable caractérisée, en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

D'autres buts, caractéristiques et avantages de l'invention apparaîtront au vu de la description qui va suivre et des dessins annexés dans lesquels :
- la figure 1 représente une vue schématique en perspective d'une portion de structure selon l'invention, en position déployée ;
- les figures 2, 3 et 4 sont des vues latérales schématiques respectivement des liens de compression, de traction et d'alignement d'une structure selon l'invention, en position repliée et en position déployée ;
- la figure 5 est une vue schématique en coupe d'une structure selon l'invention montrant la position des liens sur une série d'au moins trois panneaux ;
- la figure 6 montre un exemple de structure déployable selon l'invention dans lequel l'axe de déploiement entre deux panneaux consécutifs n'est pas parallèle à une direction générale de déploiement rectiligne de la structure; et
- la figure 7 montre un exemple de structure déployable selon l'invention dans laquelle une direction générale de déploiement de la structure n'est pas rectiligne.

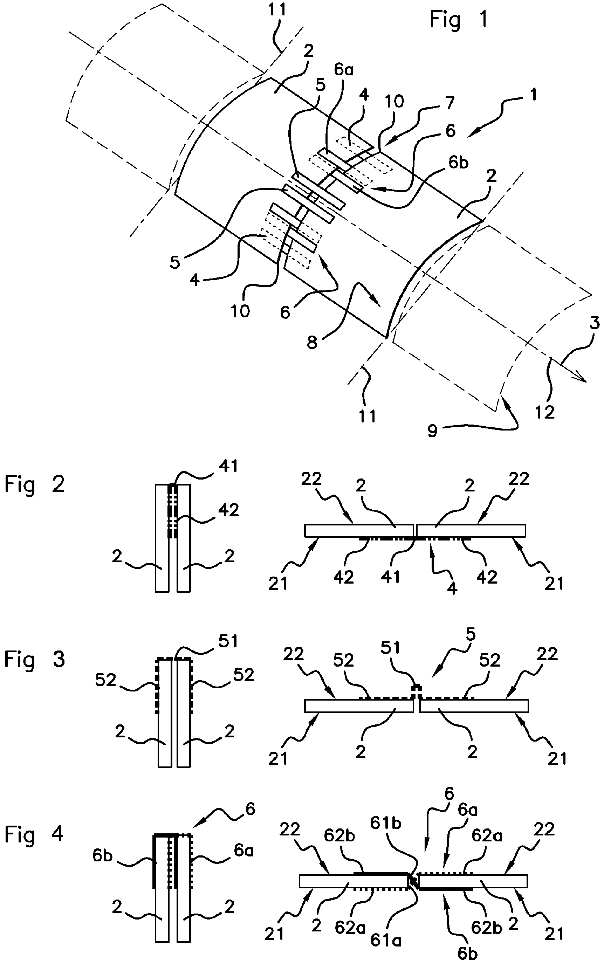

La figure 1 représente une structure 1 déployable, représentée à l'état déployé, comportant au moins deux panneaux 2 adjacents l'un à l'autre par leur bord 10. Dans l'exemple représenté, les panneaux 2 présentent au repos une surface réglée non plane dont les génératrices sont parallèles entre elles et parallèles également à un axe de déploiement 3 des deux panneaux considérés de manière à ce que les surfaces des faces principales soient dans le prolongement l'une de l'autre dans leur position déployée. L'axe de déploiement 3 est confondu avec une direction générale de déploiement 12 dans cet exemple. Les panneaux 2 peuvent présenter une ou plusieurs courbures d'axe parallèle à l'axe de déploiement et par exemple se présenter sous une forme de tuile pour une courbure unique comme représenté sur la figure 1 ou sous une forme de "tôle ondulée" pour des courbures alternatives...

Dans l'exemple de la figure 1, les panneaux 2 sont agencés bord à bord, leur face convexe 8 et leur face concave 9 étant respectivement placées d'un même côté de la structure. Les panneaux 2 sont reliées l'un à l'autre par une liaison 7 souple leur permettant d'être repliés l'un contre l'autre par rotation selon un axe de pliage 11, notamment mais pas exclusivement orthogonal à la direction générale de déploiement 12. Le repliement des panneaux 2 autour de l'axe de pliage 11 peut s'effectuer selon deux sens de rotation. Dans un premier sens de rotation autour d'un axe de pliage 11 entre deux panneaux adjacents, les faces concaves 9 des deux panneaux adjacents sont plaquées l'une contre l'autre et sont désignées comme faces internes 21 (par rapport à la liaison 7 souple considérée) tandis que les faces convexes 8 sont tournées vers l'extérieur et sont donc désignées comme faces externes 22. Symétriquement, dans un deuxième sens de rotation autour de l'axe de pliage 11, opposé au premier sens de rotation, les faces convexes 8 de deux panneaux adjacents sont plaquées l'une contre l'autre et deviennent ainsi les faces internes 21 (toujours par rapport à la liaison 7 souple considérée) alors que les faces concaves 9 deviennent les faces externes 22.

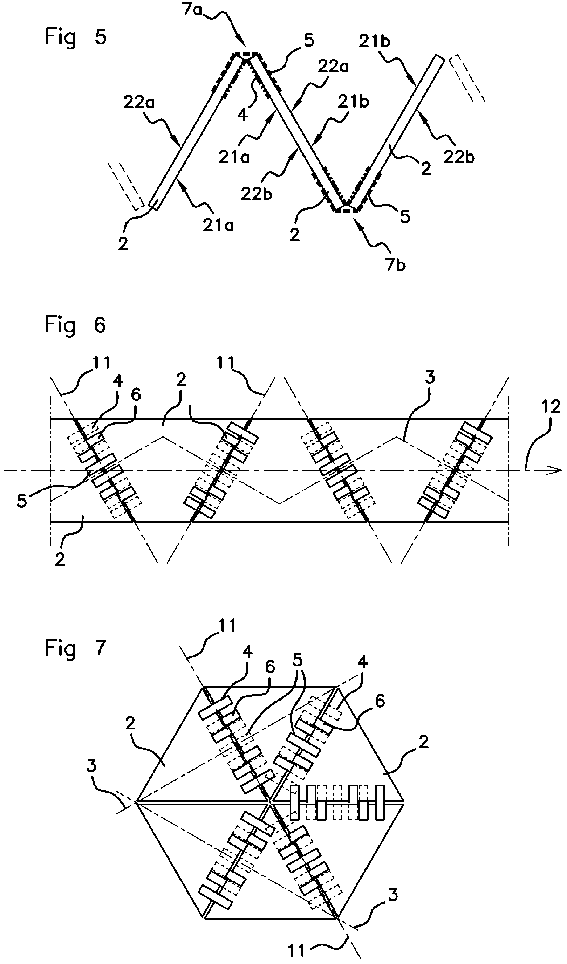

Ainsi, si la structure 1 comprend au moins trois panneaux 2 repliés en accordéon, comme représenté à la figure 5, tout panneau comportant une liaison souple 7a et 7b à chacune de ses extrémités possède une face (par exemple la face convexe 8) qui est à la fois une face externe 22a par rapport à la liaison souple 7a et une face interne 21b par rapport à la liaison souple 7b. De même, la face opposée de ce panneau (ici la face concave 9) est simultanément une face interne 21a par rapport à la liaison souple 7a et une face externe 22b par rapport à la liaison souple 7b.

La liaison 7 souple est constituée d'une pluralité de liens dont les extrémités sont respectivement fixées sur chaque panneau 2, de part et d'autre de leur bord 10 attenant.

La liaison 7 souple comprend notamment au moins un lien, dit lien de traction 4, représenté à la figure 2 dans la position repliée des panneaux 2 à gauche du dessin et dans la position déployée des panneaux à droite du dessin. À noter que dans les dessins des figures 2 à 4, l'espace entre les faces internes 21 des panneaux 2 en position repliée et entre les bords 10 des panneaux en position déployée a été exagéré pour une meilleure compréhension du dessin.

Le lien de traction 4 est constitué d'une bande de matériau souple en flexion et non extensible en traction, comme par exemple une bande métallique ou une bande de matériau composite comportant un tissu de fibres minérales ou synthétiques, par exemple des fibres métalliques (trichites), fibres de verre, de carbone, fibres aramides, etc. noyées dans une matrice de résine, de préférence d'une résine souple ou de tout autre matériau répondant aux exigences de souplesse et déformation de la liaison souple à obtenir, par exemple une résine à base de silicones, de caoutchouc naturel ou synthétique, d'élastomères, notamment fluoropolymères, etc. Le lien de traction 4 comporte deux pattes 42 d'attache fixées respectivement sur les faces internes de deux panneaux adjacents, les pattes d'attache étant reliées entre elles par une partie souple 41 formant l'articulation entre les panneaux. La position des pattes 42 d'attache et la longueur de la partie souple 41 sont telles qu'en position déployée, les deux panneaux adjacents sont maintenus bord à bord. En particulier, les pattes 42 d'attache peuvent être respectivement fixées, par exemple par collage, jusqu'au bord 10 de chacun des deux panneaux, la partie souple 41 entre les deux pattes d'attache étant d'une longueur juste suffisante pour permettre la rotation des deux panneaux autour d'un axe de rotation sensiblement confondu avec l'angle formé par le bord 10 et la face interne 21 des deux panneaux, aux jeux près nécessaires pour effectuer cette rotation.

Dans un mode de réalisation particulier, le lien de traction 4 peut être constitué par un même faisceau de fibres formant la face interne 21 des deux panneaux et s'étendant continûment entre les deux panneaux. Ainsi, les pattes d'attache 42 font intégralement partie de la surface de la face interne 21 des deux panneaux, la partie souple 41 étant protégée de l'enduction de résine au moment de la production des panneaux de manière à conserver sa souplesse.

Préférentiellement, le lien de traction 4 est placé dans une zone où l'effort de déformation élastique engendrée entre les deux panneaux adjacents par leur aplatissement en position repliée est minimal. En effet, lorsque les moyens qui maintiennent les deux panneaux plaqués l'un contre l'autre sont relâchés, les faces internes 21 de ces panneaux ont tendance à s'écarter l'une de l'autre en fonction de la position de la courbure des panneaux. Par exemple, si les faces internes des panneaux sont les faces concaves 9, les faces internes ont tendance à s'écarter plus au milieu des bords en regard des panneaux adjacents qu'à leurs extrémités. Inversement, si les faces internes sont des faces convexes 8, l'effort de déformation élastique est minimal au milieu du bord des panneaux. Dès lors, en plaçant le lien de traction 4 dans une zone où l'effort de déformation élastique est minimal, l'effort d'arrachement exercé sur les pattes d'attache 42 est lui aussi minimal, ce qui contribue à la fiabilité de la fixation des pattes d'attache 42 sur la face interne 21 des panneaux.

La liaison 7 souple comprend également au moins un lien, dit lien de compression 5, représentée à la figure 3 dans la position repliée des panneaux 2 à gauche du dessin et dans la position déployée des panneaux à droite du dessin. À l'instar du lien de traction 4, le lien de compression 5 est constitué d'une bande de matériau souple en flexion et non extensible en traction, par exemple dans les mêmes matières, et comprend deux pattes d'attache 52 reliée par une partie souple 51.

À la différence du lien de traction 4, les pattes d'attache 52 sont fixées sur les faces externes 22 de deux panneaux 2 adjacents. La partie souple 51 présente une longueur correspondant à deux fois l'épaisseur d'un panneau 2, de telle sorte qu'en position repliée, la partie souple 51 maintient les faces internes 21 des deux panneaux adjacents plaquées l'une contre l'autre. Ainsi, lorsqu'on replie l'un contre l'autre deux panneaux adjacents non plans reliés par un lien de compression 5, la partie souple 51 est en tension sous l'effet de l'effort de déformation élastique des deux panneaux. Grâce à cette tension de la partie souple 51, lorsque les deux panneaux ne sont plus maintenus plaqués l'un contre l'autre, un effort de traction s'exerce sur les faces externes 22 des deux panneaux 2, se traduisant, en combinaison avec le lien de traction 4, par un couple de rotation visant à déployer les deux panneaux. Cette tension de la partie souple 51 du lien de compression 5 se maintient sensiblement pendant tout le temps qu'une déformation élastique de la courbure des panneaux subsiste. Lorsque les panneaux 2 sont déployés, ils sont maintenus bord à bord par le lien de traction 4 et le lien de compression 5 forme une boucle à sa partie souple 51. Il est à noter que avantageusement, les pattes d'attache 52 du lien de compression 5 ne sont soumises à un effort que pendant que les panneaux sont repliés et que cet effort se traduit par une sollicitation au cisaillement du joint entre les pattes d'attache et le panneau, ce qui rend particulièrement avantageux un assemblage par collage.

Dès lors, afin de maximiser le couple de rotation exercée par chaque lien de compression 5, il est préférable de placer ceux-ci dans une zone choisie pour engendrer un effort de déformation élastique non nul, et notamment maximum, entre les panneaux en position repliée. Ainsi, les liens de compression seront placés préférentiellement au milieu des bords en regard des panneaux adjacents lorsque ceux-ci sont repliés face concave contre face concave et inversement à l'extrémité des bords des panneaux lorsque ceux-ci sont repliés face convexe contre face convexe.

Comme vu précédemment, la liaison 7 souple comporte au moins un lien de traction 4 qui maintient les panneaux 2 bord à bord en position déployée et au moins un lien de compression 5 qui exerce un couple de déploiement sur les panneaux 2 lorsque ceux-ci ne sont plus maintenus plaqués l'un contre l'autre.

La liaison 7 comprend en outre de préférence au moins un troisième lien, dit lien d'alignement 6, formé d'au moins deux bandes 6a et 6b juxtaposés fixées respectivement et alternativement entre la face externe 22 et la face interne 21 de deux panneaux adjacents. Un tel lien d'alignement 6 est représenté à la figure 4 et comprend une première bande 6a de matériau souple en flexion et non extensible en traction, par exemple réalisée dans les mêmes matériaux que les liens de traction 4 ou de compression 5. La première bande 6a comporte deux pattes d'attache 62a séparée par une partie souple 61a. L'une des pattes d'attache 62a est fixée sur la face interne 21 d'un premier panneau 2 alors que l'autre patte d'attache 62a est fixée sur la face externe 22 d'un deuxième panneau adjacent au premier. Le lien d'alignement 6 comprend une deuxième bande 6b, juxtaposée à la première bande 6a, et comprend également deux pattes attache 62b séparés par une partie souple 61b. La deuxième bande 6b est-elle aussi fixée alternativement entre la face externe 22 du premier panneau 2 et la face interne 21 du deuxième panneau adjacent au premier. Les parties souples 61a et 61b se croisent donc en regard du chant des deux panneaux en regard. Ces deux parties souples ne sont pas fixées aux panneaux, ce qui permet la rotation des panneaux l'un en face de l'autre. Cependant, grâce à la juxtaposition des deux bandes 6a et 6b, tout mouvement latéral des panneaux l'un par rapport à l'autre est fortement limité. Dès lors grâce au lien d'alignement 6, les panneaux sont maintenus latéralement l'un en face de l'autre le long de leurs bords.

Dans un mode de réalisation préférentiel de la structure 1 déployable, les panneaux 2 sont reliés deux à deux par des liaisons 7 souples. Chacune de ces liaisons 7 souples comprend au moins trois groupes de liens, chaque groupe de liens comprenant au moins un lien de traction 4 ou un lien de compression 5 associé à au moins un lien d'alignement 6. Les groupes de liens sont placés préférentiellement au milieu et aux extrémités des bords 10 en regard des panneaux. Ainsi, comme représenté sur la figure 1, les deux panneaux 2 représentés en trait plein sont reliés par leurs bords 10 en regard par une liaison 7 souple. Cette liaison 7 souple et adaptée pour permettre le pliage des deux panneaux de telle sorte que leurs faces concaves 9 soient des faces internes 21 pour la liaison souple considérée. Un premier groupe de liens comprend deux liens de compression 5 fixés sur la face convexe 8 des panneaux 2 (qui est la face externe 22 de ces panneaux), ces liens de compression étant situés de part et d'autre de l'axe médian longitudinal des panneaux et deux liens d'alignement 6 placés de part et d'autre des liens de compression 5. Ce premier groupe de liens est complété par deux autres groupes de liens comprenant chacun un lien de traction 4 placés aux extrémités latérales du bord 10 des panneaux 2. À l'intérieur des liens de traction 4, en direction du milieu des bords 10, chaque groupe est complété par au moins un lien d'alignement 6. Bien entendu, en fonction de la largeur des panneaux 2, il peut être envisagé de placer plus de trois groupes de liens, à intervalles réguliers le long du bord 10 des panneaux. De même, chaque groupe de liens peut être constitué de liens de traction 4 et de liens de compression 5 associés entre eux, par exemple le lien de traction peut être placé sur les faces internes des panneaux, juste en-dessous d'un lien de compression 5.

La liaison 7 souple peut s'étendre sur toute la largeur du panneau ou seulement sur une fraction de celle-ci. En particulier, lorsque les efforts de déploiement ou les efforts appliqués à la structure sont faibles (par exemple pour des satellites en microgravité) et que l'on veut minimiser la masse ajoutée par les liens, le rapport entre la largeur de la liaison souple et la largeur des panneaux peut être de 1 à 30. Par contre, en présence d'efforts plus importants, il est préférable que les liens formant la liaison souple s'étendent sur toute la largeur du panneau.

Préférentiellement, pour des efforts importants, la liaison souple couvre 100% de la largeur du panneau avec au moins 25% occupés par des liens de traction 4, 25% par des liens de compression 5, ces derniers pouvant venir en recouvrement des liens de traction, et 50% par des liens d'alignement. L'épaisseur des liens dépend également des efforts auxquels ils doivent résister et des matériaux dans lesquels ils sont réalisés et varie en général entre 0,1 et 1 fois l'épaisseur du panneau.

Dans une variante de la structure 1 déployable, il est possible que les axes de déploiement 3 entre les panneaux 2 ne soient pas sensiblement parallèles à la direction générale de déploiement 12. Comme représenté à la figure 6, les panneaux 2 peuvent avoir une forme triangulaire ou encore trapézoïdale avec un axe de pliage 11 non perpendiculaire à la direction générale de déploiement 12. Dans cet exemple, les axes de déploiement 3 présentent un angle alternativement positif et négatif autour de la direction générale de déploiement 12, de telle sorte qu'une fois déployée la structure 1 présente une direction globalement rectiligne parallèle à la direction générale de déploiement 12.

Il est également possible de concevoir des structures 1 déployables selon une direction de déploiement non rectiligne comme représenté par exemple sur la figure 7. Dans cet exemple, des panneaux 2 de forme triangulaire sont articulés l'un par rapport à l'autre par des liaisons souples agencées pour permettre un déploiement des panneaux selon une direction de déploiement sensiblement circulaire (hexagonale dans l'exemple représenté). Un tel agencement permet ainsi de réaliser des structures adaptées pour former par exemple des antennes paraboliques.

L'invention peut faire l'objet de nombreuses variantes et applications autres que celles décrites ci-dessus. En particulier, il va de soi que sauf indication contraire les différentes caractéristiques structurelles et fonctionnelles de chacun des modes de réalisation décrits ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente. En particulier une structure déployable selon l'invention peut présenter des formes variées, et être par exemple en forme de T, de cube etc.

## Revendications

1. Structure (1) déployable à déploiement spontané, comprenant au moins deux panneaux (2) adjacents articulés entre eux, adaptés pour se déployer selon un axe de déploiement (3), chaque panneau présentant :
- une surface non plane au repos, délimitée par un bord (10) non rectiligne au repos, inscrit dans un plan orthogonal à l'axe de déploiement, parallèle à un bord attenant du panneau adjacent, chaque bord admettant en tout point un plan tangent commun à la surface des deux panneaux adjacents,
- une liaison souple (7) reliant les bords attenants desdits panneaux,
ladite structure étant adaptée pour pouvoir être placée :
- dans une position repliée dans laquelle les panneaux sont repliés les uns sur les autres de façon à présenter des faces principales en regard, dites faces internes (21), les panneaux étant maintenus à plat par compression et déformation élastique de leur courbure, et
- dans une position déployée dans lequel les panneaux sont alignés bord à bord sur leurs bords attenants et s'étendent dans le prolongement les uns des autres,
- ladite liaison souple comprenant au moins un premier lien, dit lien de traction (4), adapté pour relier, en position repliée, en au moins un point les faces internes de deux panneaux adjacents, et pour maintenir lesdits panneaux bord à bord en position déployée,
**caractérisée en ce que** la liaison souple comprend au moins un deuxième lien, dit lien de compression (5), d'une longueur adaptée pour, en position repliée, être plaqué sur des faces principales, dites faces externes (22), opposées aux faces internes de deux panneaux adjacents, ledit lien de compression étant adapté pour rester sous tension tant qu'une déformation élastique de la courbure des panneaux subsiste.

2. Structure selon la revendication 1, **caractérisée en ce que** les panneaux (2) adjacents présentent une surface réglée non plane dont les génératrices sont parallèles entre elles et parallèles à l'axe de déploiement (3)

3. Structure selon l'une quelconque des revendications 1 ou 2, **caractérisée en ce que** au moins un lien de compression (5) est placé dans une zone choisie pour engendrer un effort de déformation élastique non nul des panneaux en position repliée.

4. Structure selon l'une quelconque des revendications 1 à 3, **caractérisée en ce que** chaque lien de traction (4) est placé dans une zone où l'effort de déformation élastique engendré entre deux panneaux adjacents par leur aplatissement en position repliée est minimal.

5. Structure selon l'une quelconque des revendications 1 à 4, **caractérisée en ce que** les liens (4, 5) de traction et de compression comprennent au moins une bande, dite bande flexible, souple en flexion fixée sur les faces correspondantes des panneaux.

6. Structure selon la revendication 5, **caractérisée en ce qu'**au moins une bande flexible est une bande métallique.

7. Structure selon l'une des revendications 5 ou 6, **caractérisée en ce qu'**au moins une bande flexible est inextensible en traction.

8. Structure selon l'une des revendications 5 à 7 **caractérisée en ce qu'**au moins une bande flexible est inélastique en flexion.

9. Structure selon l'une quelconque des revendications 5 à 8, **caractérisée en ce qu'**au moins une partie d'au moins une bande flexible est formée d'une extension des faces correspondantes des panneaux.

10. Structure selon l'une quelconque des revendications 1 à 9, **caractérisée en ce que** la liaison (7) souple comprend en outre au moins un troisième lien, dit lien d'alignement (6), comprenant au moins deux bandes (6a, 6b) flexibles non extensibles en traction juxtaposées fixées respectivement et alternativement entre la face externe (22) et la face interne (21) de deux panneaux (2) adjacents.

11. Structure selon l'une quelconque des revendications 9 ou 10, **caractérisée en ce que** deux panneaux (2) adjacents sont reliés par au moins trois groupes de liens (4, 5, 6) placés au milieu et aux extrémités des bords (10) en regard desdits panneaux, chaque groupe de liens comprenant au moins un lien d'alignement (6) et au moins un lien choisi parmi un lien de traction (4) et un lien de compression (5).

12. Structure selon l'une quelconque des revendications 1 à 11, **caractérisée en ce que** chaque lien de compression (5) est adapté pour présenter en position déployée des panneaux une longueur totale entre ses deux extrémités qui est inférieure à la longueur totale de ce lien de compression en position repliée des panneaux, de telle sorte qu'en position déployée les panneaux soient maintenus bord à bord par chaque lien de traction (4).

13. Structure selon l'une quelconque des revendications 1 à 12, **caractérisée en ce que** chaque lien de compression (5) est adapté pour pouvoir former une boucle lorsque les panneaux sont en position déployée maintenus bord à bord par chaque lien de traction (4).

14. Structure selon l'une quelconque des revendications 1 à 13, **caractérisée en ce que** chaque lien de compression (5) est inélastique en flexion et/ou au moins partiellement élastique en traction.

15. Structure selon l'une quelconque des revendications 1 à 14, **caractérisée en ce que** chaque lien de compression (5) comporte au moins une partie souple en flexion élastique en traction s'étendant entre les panneaux de sorte que sa longueur diminue lorsque la structure est déployée de la position repliée vers la position déployée.
